# EUROPEAN PATENT APPLICATION

(11) **EP 2 854 409 A1**
(43) Date of publication of application: **01.04.2015**
(21) Application number: 13186781.4
(22) Date of filing: 30.09.2013
(51) Int. Cl.: H04N 21/2543, H04N 21/258, H04N 21/472, H04N 21/475, H04L 29/06

(54) **A method and a system for controlling parameters of data network access via a cable television network terminal**

(71) Applicant: Advanced Digital Broadcast S.A., 1292 Chambesy (CH)
(72) Inventor: Micewicz, Jaroslaw, 65-119 Zielona Gora (PL); Sergiel, Przemyslaw, 65-119 Zielona Gora (PL)
(74) Representative: Pawlowski, Adam

(57) **Abstract**

A computer-implemented method for controlling data network access parameters via a cable television network terminal (120) in a cable television system comprising a headend infrastructure (110) providing data network access to a plurality of terminals (120), wherein the data network access parameters are controlled by a network parameters controller (112), characterized in that it comprises the steps of: providing a data network access controller (130) with a questions database (131), selecting (201) a question from the questions database (131), presenting (202) the question to a user of the terminal (120) and collecting the answer via the terminal (120); and sending instructions from the data network access controller (130) to the network parameters controller (112) to adapting (204, 205) the data network access parameters depending on the received answer.

## Description

The object of the invention is a method and a system for controlling parameters of data network access via a cable television network terminal.

There are known communication networks wherein a server and a large number of communication terminals is owned by a single entity and a number of users use it by the permission of the network owner - for example, cable television networks at a hotel facility. Such cable networks may offer the users various additional services, such as data network (e.g. Internet) access.

The data network access may be made accessible to other devices, such as user's own laptop computer via a dedicated interface of the cable television terminal, such as Ethernet interface or wireless interface.

It would be desirable to provide a method and system that would allow control of parameters of data network access in the cable television network.

The object of the invention is a computer-implemented method for controlling data network access parameters via a cable television network terminal in a cable television system comprising a headend infrastructure providing data network access to a plurality of terminals, wherein the data network access parameters are controlled by a network parameters controller, **characterized in that** it comprises the steps of: providing a data network access controller with a questions database, selecting a question from the questions database, presenting the question to a user of the terminal and collecting the answer via the terminal; and sending instructions from the data network access controller to the network parameters controller to adapting the data network access parameters depending on the received answer.

. Preferably, the method is executed upon power-on of the cable network terminal.

Preferably, the method is executed on request of the user.

Preferably, the method is executed periodically.

Preferably, the method comprises selecting a question to be asked from a database of questions.

Preferably, the method the network access parameter is at least one of: network access speed, network access duration or data availability.

Another object of the invention is a computer program comprising program code means for performing all the steps of the method according to the invention when said program is run on a computer, as well as a computer readable medium storing computer-executable instructions performing all the steps of the method according to the invention when executed on a computer.

Another object of the invention is a system for controlling data network access parameters via a cable television network terminal in a cable television system comprising a headend infrastructure providing data network access to a plurality of terminals, wherein the data network access parameters are controlled by a network parameters controller, characterized by comprising a data network access controller comprising a questions database and configured to: select a question from the questions database; present the question to a user of the terminal and collect the answer via the terminal; and- send instructions to the network parameters controller to adapt the data network access parameters depending on the received answer.

The present invention is shown by means of exemplary embodiment on a drawing, in which:

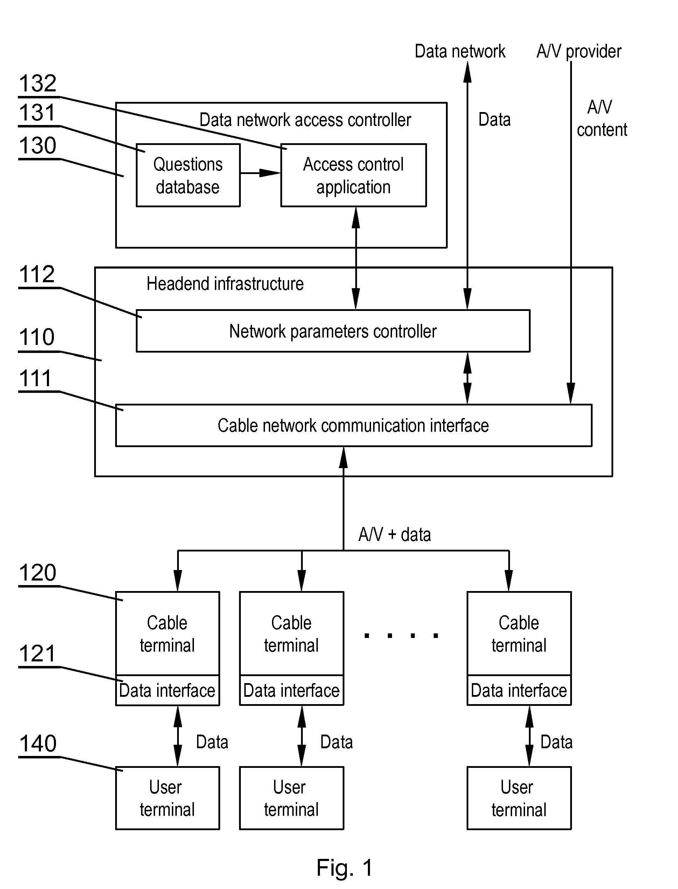

Fig. 1 shows one embodiment of a structure of the system according to the invention;
Fig. 2 shows the steps of the method according to the invention.

The system according to the invention is directed to cable television networks, such as cable networks at hotel facilities. Such network comprises a headend infrastructure 110, which comprises cable network communication interface 111 for transmitting to the cable network data comprising a mix of audio/video content (such as television programs and/or video on demand content) and data (such as Internet data).

Data from the headend infrastructure is received by a plurality of cable network terminals 120, such as television sets with integrated cable television tuners, set-top boxes (STBs) or set-back boxes (SBBs). The cable network terminals 120 have a data interface 121, via which user terminals 140, such as laptop computers, may gain access to the data network. The data interface 121 can be a wired interface, such as Ethernet, or a wireless interface, such as WiFi.

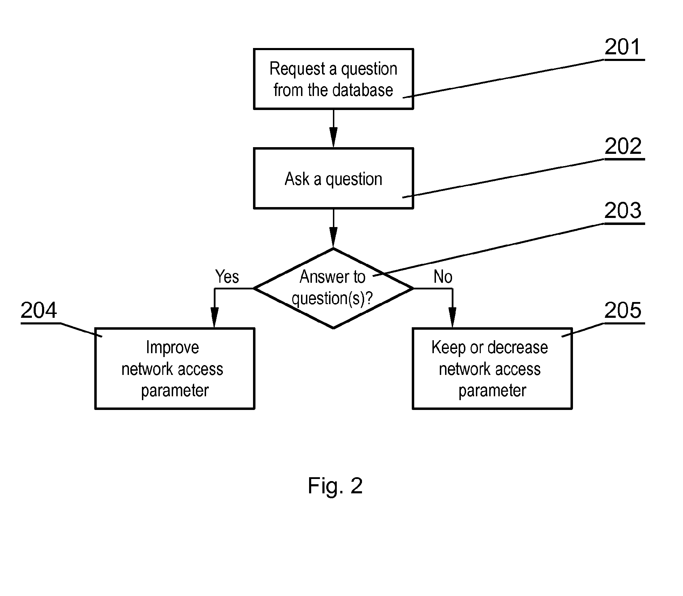

The system further comprises a data network access controller 130 for carrying out the method shown in Fig. 2. The data network access controller may be a separate module, such as a dedicated computer, or may be implemented as a part of the headend infrastructure.

The data network access controller 130 comprises a questions controller 131. The questions controller 131 may be a database of questions, which are to be directed to the users of the system. The questions controller 131 is configured to ask a user a question, collect the answer and determine whether the answer was correct. The answer may be classified as correct if it meets specific criteria (such as correct selection of item from a list). Alternatively, for open questions related e.g. to scoring of an item (such as scoring of a quality of service at the hotel facility in a scale 1-10), any answer may be classified as correct.

The headend infrastructure 110 further comprises a network parameters controller 112 which sets network access parameters for a given terminal. In one exemplary embodiment, the network parameters controller 112 may set network data transfer speed to a low speed (e.g. 128kbps) or a high speed (e.g. 10 Mbps) depending on the output of the questions controller 131 for that terminal. Other network access parameters may include network access time - which can be a short time (e.g. 15 minutes) or a long time (e.g. 1 hour or unlimited access) or data availability - which can be limited (to particular Internet sites) or unlimited (to all network sites). The data access parameters can be limited at the link between the headend infrastructure 110 and the particular cable terminal 120, or the data interface 121 of the particular cable terminal 120 may be instructed to adapt its parameters accordingly.

The network access controlled by an access control application 132, which operates according to the procedure of Fig. 2 as explained below.

First, the access control application in step 201 selects a question from the questions database. Then in step 202 it presents the question to the user of the terminal, i.e. it sends the question to the terminal 120 via the cable network. It can be a single question or a set of questions. Next, it determines in step 203 whether the question (or a set of questions) was answered.

This may involve checking whether the answer was correct or simply checking whether the user responded to the question. If the question was answered, then in step 204 the network parameters controller 112 is instructed to improve a particular parameter (such as speed, access duration or data availability) for the particular terminal. If not, then in step 205 the network parameters controller 112 is instructed to keep or decrease the network access parameters for the user.

The procedure of Fig. 2 can be executed upon:
- upon power-on of the cable network terminal (e.g. when a hotel guest powers up the tv)
- on request of the user (e.g. when the user determines that the network access parameters are too low)
- periodically (e.g. every hour)

It can be easily recognized, by one skilled in the art, that the aforementioned method for conducting an interactive survey may be performed and/or controlled by one or more computer programs. Such computer programs are typically executed by utilizing the computing resources of the device. The computer programs can be stored in a non-volatile memory (or otherwise a non-transitory computer storage medium), for example a flash memory or in a volatile memory, for example RAM and are executed by the processing unit. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

In addition, any combination of the appended claims in envisaged in the present application.

## Claims

1. A computer-implemented method for controlling data network access parameters via a cable television network terminal (120) in a cable television system comprising a headend infrastructure (110) providing data network access to a plurality of terminals (120), wherein the data network access parameters are controlled by a network parameters controller (112), **characterized in that** it comprises the steps of:
- providing a data network access controller (130) with a questions database (131);
- selecting (201) a question from the questions database (131);
- presenting (202) the question to a user of the terminal (120) and collecting the answer via the terminal (120); and
- sending instructions from the data network access controller (130) to the network parameters controller (112) to adapting (204, 205) the data network access parameters depending on the received answer.

2. The method according to claim 1, **characterized in that** it is executed upon power-on of the cable network terminal (120).

3. The method according to claim 1, **characterized in that** it is executed on request of the user.

4. The method according to claim 1, **characterized in that** it is executed periodically.

5. The method according to any of previous claims, **characterized by** selecting a question to be asked from a database of questions (131).

6. The method according to any of previous claims, **characterized in that** the network access parameter is at least one of: network access speed, network access duration or data availability.

7. A computer program comprising program code means for performing all the steps of the method according to any of claims 1-6 when said program is run on a computer.

8. A computer readable medium storing computer-executable instructions performing all the steps of the method according to any of claims 1-6 when executed on a computer.

9. A system for controlling data network access parameters via a cable television network terminal (120) in a cable television system comprising a headend infrastructure (110) providing data network access to a plurality of terminals (120), wherein the data network access parameters are controlled by a network parameters controller (112), **characterized by** comprising a data network access controller (130) comprising a questions database (131) and configured to:
- select (201) a question from the questions database (131);
- present (202) the question to a user of the terminal (120) and collect the answer via the terminal (120); and- send instructions to the network parameters controller (112) to adapt (203, 204) the data network access parameters depending on the received answer.
